# EUROPÄISCHE PATENTSCHRIFT

(11) **EP 1 946 173 B1**
(45) Veröffentlichungstag und Bekanntmachung des Hinweises auf die Patenterteilung: **18.12.2013**
(21) Anmeldenummer: 06805942.7
(22) Anmeldetag: 29.09.2006
(51) Int. Cl.: G02B 21/32, G02B 21/24, G02B 21/36

(54) **PROBENMANIPULATIONSVORRICHTUNG**
SAMPLE MANIPULATION DEVICE
DISPOSITIF DE MANIPULATION D'ECHANTILLONS

(30) Priorität: 08.11.2005 DE 102005053669
(43) Veröffentlichungstag der Anmeldung: 23.07.2008
(73) Patentinhaber: Kilper, Roland, 07745 Jena (DE)
(72) Erfinder: KILPER, Roland, 07749 Jena (DE)
(74) Vertreter: Geyer, Fehners & Partner
(86) Internationale Anmeldenummer: PCT/EP2006/009457
(87) Internationale Veröffentlichungsnummer: WO 2007/054161

(56) Entgegenhaltungen:
- EP-A- 1 564 575
- SUZUKI A ET AL: "Automated micro handling" COMPUTATIONAL INTELLIGENCE IN ROBOTICS AND AUTOMATION, 2003. PROCEEDINGS. 2003 IEEE INTERNATIONAL SYMPOSIUM ON JULY 16 - 20, 2003, PISCATAWAY, NJ, USA,IEEE, Bd. 1, 16. Juli 2003 (2003-07-16), Seiten 348-353, XP010651749 ISBN: 0-7803-7866-0

## Beschreibung

### Gebiet der Erfindung

Die Erfindung betrifft eine Probenmanipulationsvorrichtung, die eine Beobachtungseinheit, mit der eine Probe beobachtet und eine Soll-Position, an der sich ein zu entnehmender Teil der Probe befindet, ausgewählt wird, sowie einen Probentisch, der die Probe aufnimmt, umfaßt. Die Erfindung betrifft Schwierigkeiten in der Handhabung, die auftreten, wenn eine Probe beobachtet wird und gleichzeitig an ihr Manipulationen vorgenommen werden, die über die Beobachtungseinheit überwacht werden.

### Stand der Technik

In der medizinischen, biologischen und biochemischen Forschung gewinnen Fragestellungen, bei denen Experimente mit einzelnen Zellen durchgeführt werden, immer mehr an Bedeutung. Ein wichtiges Beispiel hierfür ist die Analyse und Aufklärung molekularer Regelmechanismen bzw. sogenannter Molekülkaskaden. Dabei wird die interessierende Zelle aus dem Zellverband herausgelöst und in eine für den Fortbestand der Zelle geeignete Nährlösung transferiert. Unter günstigen Bedingungen wird die Ausgangszelle solange vermehrt, bis ausreichend Material für das vorgesehene analytische Verfahren vorhanden ist; es werden sogenannte Zellinien hergestellt. Ein wesentlicher Nachteil der Methode der Herstellung von Zellinien ist, daß die Ausgangszelle und die von dieser abstammenden Zellen idealisierte Umweltbedingungen vorfinden. Analytische Ergebnisse, die auf diesem Weg erzielt werden, geben nicht die Bedingungen wieder, die im Organismus tatsächlich vorliegen. Auch neurobiologische Fragestellungen können auf diese Weise nicht oder nur unzureichend beantwortet werden. Beispielsweise repräsentiert ein aus einem Netzwerk von Nervenzellen herausgelöstes Neuron nach einer gewissen Zeit nicht mehr diejenige Zelle, die sie noch im Netzwerk dargestellt hatte. Derzeit ist kein Verfahren bekannt, bei dem der Zustand der Zelle innerhalb des Netzwerks bei gleichzeitiger Vermehrung konserviert werden kann.

Auf der anderen Seite können jedoch biochemische Fragestellungen angegangen werden, wenn empfindliche analytische Methoden verwendet werden, die mit geringen Materialmengen - insbesondere mit einzelnen Zellen - auskommen. Voraussetzung dabei ist, daß einzelne Zellen der Probe entnommen und innerhalb einer bestimmten Zeit in die Analyseapparatur transferiert werden. Nur so kann sichergestellt werden, daß zellinterne Abbauprozesse die zu untersuchenden Stoffe nicht zersetzt haben. Eine Vorraussetzung dafür ist die zielgerichtete Entnahme einer einzelnen, identifizierten und ausgewählten Zelle. Eine Möglichkeit zur Identifikation ist die Ausnutzung morphologischer Unterschiede, die mittels Mikroskopie festgestellt werden können. Eine andere Möglichkeit der Identifikation besteht in der Nutzung von Farbstoffen. Diese Farbstoffe können mittels Fluoreszenzmikroskopie sichtbar gemacht werden und ermöglichen auf diese Weise eine Identifikation derjenigen Zellen, die mit diesem Farbstoff markiert sind.

Im Stand der Technik gibt es derzeit mehrere Möglichkeiten für die Entnahme einzelner Zellen aus einer Probe. Eine Methode besteht in der manuellen Präparation, bei der der Experimentator die Probe durch ein Stereomikroskop beobachtet und ihr mittels mechanischer Werkzeuge einzelne Zellen entnimmt. Diese Methode ist jedoch sehr aufwendig, langwierig und setzt eine überdurchschnittliche Fingerfertigkeit des Experimentators voraus, die in der Regel nur im Laufe von Jahren erworben werden kann. Eine andere Möglichkeit der Präparation besteht in der Mikrodissektion, bei der beispielsweise UV-Laser zum Schneiden verwendet werden. Bei dieser Art der Präparation ist man jedoch auf Gewebeschnitte angewiesen, die keine lebenden Zellen repräsentieren. Darüber hinaus müssen inverse Mikroskope verwendet werden, d.h. die notwendige manuelle Präparation einerseits und die Beobachtung andererseits erfolgen von entgegengesetzten Richtungen auf das Präparat. Zwar läßt sich dies durch die aufeinanderfolgende Anwendung von Stereomikroskop und inversem Mikroskop umgehen, diese letztgenannte Methode ist jedoch aufgrund des sich ständig wiederholenden Wechsels der Mikroskope erhöht fehleranfällig.

In der EP 1 564 575 A1 wird eine Probenmanipulationsvorrichtung beschrieben, die über ein Manipulationswerkzeug und eine Positionsmeßeinheit verfügt. Zur Beobachtung der Probe wird ein Mikroskop verwendet. Positionsmessung und Beobachtung erfolgen durch dasselbe Objektiv auf der Oberseite des Probentisches. Auf der anderen Seite des Probentisches befindet sich eine Beleuchtungsanordnung, mit der das von einer Lichtquelle emittierte Licht manipuliert und auf die Probe gelenkt werden kann.

Im Artikel "Automated Micro Handling" von A. Suzuki et al., erschienen in Proc. 2003 IEEE Int. Symposium on Comp. Intelligence in Robotics and Automation, S. 348-353, wird eine Vorrichtung beschrieben, mit der Mikromanipulationen an auf einem verfahrbaren Probentisch angeordneten Proben vorgenommen werden können. Oberhalb des Probentisches mit Zugang zur Probe ist eine Manipulationsspitze angeordnet. Unterhalb des Probentisches befindet sich eine Mikroskop mit einer CCD-Kamera. Mittels entsprechender Algorithmen wird die Postion der Spitze automatisch kalibriert, wobei ein Autofokus-System zum Einsatz kommt. Eine weitere Beobachtungseinheit abgesehen von dem Mikroskop ist nicht vorgesehen und auch nicht notwendig, da die Aufnahme von Objekten automatisch erfolgen soll.

### Beschreibung der Erfindung

Aufgabe der Erfindung ist es daher, eine Probenmanipulationsvorrichtung der eingangs genannten Art dahingehend weiterzuentwickeln, daß die Präparation und Manipulation einzelner Zellen vereinfacht wird.

Diese Aufgabe wird durch eine Probenmanipulationsvorrichtung gemäß Anspruch 1 gelöst, wobei ein räumlich relativ zur Beobachtungseinheit verstellbares Manipulationswerkzeug mit einer Manipulationsspitze, mit der der Probe Teile entnommen werden, eine Steuereinheit, mit der die Verstellung des Manipulationswerkzeugs gesteuert wird, sowie eine mit der Steuereinheit verbundene optische Positionsmeßeinheit vorgesehen sind, wobei mit der optischen Positionsmeßeinheit die Ist-Position der Manipulationsspitze bestimmt wird, so daß eine gezielte Verstellung der Manipulationsspitze zur Soll-Position durchgeführt werden kann. Dabei sind Positionsmeßeinheit und Beobachtungseinheit jeweils als Mikroskope ausgestaltet, wobei der Probentisch zwischen der Beobachtungseinheit und der optischen Positionsmeßeinheit angeordnet ist. Die Positionsmeßeinheit verfügt darüber hinaus auch über ein Objektiv mit einer Tiefenschärfe von der Größenordnung der Manipulationsspitze.

Die Ausgestaltung von Beobachtungs- und Positionsmeßeinheit jeweils als Mikroskope und der damit möglichen Vergrößerung hat eine höhere Genauigkeit zur Folge.

Vorteilhaft platzsparend ist der Probentisch zwischen Beobachtungs- und Positionsmeßeinheit angeordnet, und zwar so, daß sich die optische Manipulationseinheit unterhalb des Probentisches befindet. Die Manipulationsspitze befindet sich in diesem Fall auf der Seite der Beobachtungseinheit. Entsprechend müssen die optischen Eigenschaften des Probentisches bei der Bestimmung der Position der Manipulationsspitze berücksichtigt werden. Alternativ zur Erfindung ist auch eine Anordnung von Beobachtungs- und Positionsmeßeinheit auf derselben Seite des Probentisches möglich.

Die Positionsmeßeinheit weist ein Objektiv mit einer Tiefenschärfe von einer Größenordnung der Manipulationsspitze auf. Auf diese Weise wird gewährleistet, daß der Fehler bei der Vermessung der Spitze möglichst klein ist, ohne jedoch den Zeitaufwand für die Vermessung in die Höhe zu treiben, wie es bei einem Objektiv mit noch geringerer Tiefenschärfe der Fall wäre.

Ein Experimentator beobachtet also die Probe in der Beobachtungseinheit und wählt einen Teil der Probe aus, der entnommen werden soll. Diese Auswahl kann beispielsweise erfolgen, indem der zu entnehmende Teil der Probe ins Zentrum des Blickfeldes der Beobachtungseinheit geführt wird. Zur Erleichterung kann dabei ein Fadenkreuz in der Mitte des Blickfeldes dienen. Der Teil der Probe im Fadenkreuz entspricht in diesem Fall der Soll-Position. Eine andere Möglichkeit ergibt sich, wenn das Bild der Probe beispielsweise auf einen Bildschirm dargestellt wird und eine entsprechende Region im Bild mit einer Computermaus o.ä. ausgewählt wird. Die Steuereinheit kann dann die Manipulationsspitze des Manipulationswerkzeugs an die entsprechende Soll-Position bewegen. Voraussetzung ist allerdings, daß die gegenwärtige Ist-Position der Manipulationsspitze bekannt ist. Zur Bestimmung der Ist-Position der Manipulationsspitze dient die optische Position der Meßeinheit. Die Manipulationsspitze wird manuell oder automatisch ins Gesichtsfeld der Positionsmeßeinheit gefahren und so lange bewegt, bis sie von der Positionsmeßeinheit erfaßt wird. Da die die Positionsmeßeinheit und die Beobachtungseinheit mit ihren jeweiligen Koordinatensystemen fest zueinander positioniert sind, können die von der optischen Positionsmeßeinheit in deren Koordinatensystem bestimmten Koordinaten in die Koordinaten der Beobachtungseinheit transformiert werden. Man erhält auf diese Weise den dreidimensionalen Abstandsvektor von der Manipulationsspitze zur Soll-Position und kann eine entsprechende Verstellung durchführen.

Bevorzugt ist dabei bei der Positionsmeßeinheit eine Bildaufnahme- und Bildverarbeitungseinheit vorgesehen. Auf diese Weise läßt sich der Prozeß der Koordinatenbestimmung und -transformation automatisch durchführen, wenn die Bildverarbeitungseinheit auch mit der Steuereinheit verbunden ist. Die Bildverarbeitungseinheit ist dabei in der Lage, selbstständig zu erkennen, wann die Manipulationsspitze scharf gestellt ist.

Vorteilhaft ist der Probentisch außerdem relativ zur Beobachtungs- und Positionsmeßeinheit verstellbar, insbesondere in der Ebene des Tisches, so daß die Probe in dieser Ebene verschoben werden kann.

Die Positionsmeßeinheit kann entlang ihrer optischen Achse verstellbar ausgeführt sein.

In einer bevorzugten Ausgestaltung der Erfindung liegen die optischen Achsen der Objektive von Beobachtungs- und Positionsmeßeinheit parallel. Die Ebene des Probentisches liegt dann zweckmäßigerweise senkrecht zu diesen optischen Achsen. Dies erleichtert den Aufbau der Vorrichtung, selbstverständlich sind aber auch Ausführungen möglich, bei denen die optischen Achsen nicht parallel stehen. Hier ist durchaus eine Ausführung denkbar, bei der beispielsweise Positionsmeßeinheit und Beobachtungseinheit auf derselben Seite des Probentisches angeordnet sind und die optischen Achsen nicht parallel verlaufen. Sie können jedoch so angeordnet sein, daß sich die optischen Achsen beispielsweise an einem Punkt auf dem Probentisch schneiden. In diesem Fall, wie auch in dem Fall, daß die optischen Achsen nicht nur parallel verlaufen, sondern aufeinander fallen, lassen sich vorteilhaft laseroptische Werkzeuge und/oder laseroptische Meßeinrichtungen in die Vorrichtung einbinden. Diese können dann durch das Objektiv der Positionsmeßeinheit in die Objektebene eingekoppelt werden. Beispiele für solche Werkzeuge sind eine optische Pinzette oder auch ein Laserskalpell. Die Verstellbarkeit entlang der optischen Achse bietet hier die Möglichkeit, den Fokus zu verändern und so beispielsweise mit dem Laserskalpell parallel zur Tischebene Gewebeschnitte in verschiedenen Höhen - gemessen von der Tischebene - an der Probe vorzunehmen.

Die Werkzeuge müssen nicht notwendigerweise in die Probenmanipulationsvorrichtung integriert sein, sie können auch von außen beispielsweise über Faser-Ports einkoppelbar sein. Auf diese Weise wird die Vorrichtung preisgünstiger, und Spezialwerkzeuge wie ein Lasermikrotom lassen sich nach Art von Modulen leicht einkoppeln.

Das Manipulationswerkzeug ist dabei vorteilhaft so gestaltet, daß die Manipulationsspitze, bei der es sich beispielsweise um ein eine Kapillare zur Entnahme von Zellen handeln kann, ausgewechselt werden kann.

In einer anderen, nicht zur Erfindung gehörigen Ausgestaltung wird auf das Manipulationswerkzeug mit der Steuereinheit verzichtet. Statt einer optischen Positionsmeßeinheit ist eine optische Manipulationseinheit vorgesehen, mit der ein ausgewählter Probenteil manipuliert werden kann. Die optischen Baugruppen können dabei im wesentlichen identisch mit denen der Positionsmeßeinheit sein, auf die Bildaufnahme- und Bildverarbeitungseinheit kann hier jedoch verzichtet werden. Insbesondere kann auch der Probentisch wieder zwischen Beobachtungs- und Manipulationseinheit angeordnet sein, wobei er vorteilhaft relativ zu diesem verstellbar ist. Vorteilhaft sind Beobachtungs- und Manipulationseinheit jeweils als Mikroskope ausgestaltet, wobei die Manipulationseinheit vorteilhaft entlang ihrer optischen Achse verstellbar ist. Die optischen Achsen der Objektive der beiden Einheiten können parallel liegen oder auch aufeinander fallen. Grundsätzlich ist eine Kombination beider Ausführungen denkbar, d.h. die optische Manipulationseinheit kann so ausgestaltet sein, daß sie die Funktionen der optischen Positionsmeßeinheit übernehmen kann.

Besonders bevorzugt umfaßt die Manipulationseinheit laseroptische Werkzeuge und/oder laseroptische Meßeinrichtungen. Dies kann beispielsweise eine optische Pinzette sein.

Als Beobachtungseinheit kann für alle Ausführungen beispielsweise ein Auflichtmikroskop oder auch ein Stereomikroskop vorgesehen sein. Darüber hinaus kann bei der Beobachtungseinheit eine Bildaufnahme- und Bildverarbeitungseinheit vorgesehen sein. CCD- oder CMOS-Arrays sind Beispiele für solche Bildaufnahmeeinheiten. Im Falle eines Stereomikroskops kann eine solche Bildaufnahmeeinheit nur mit einem der beiden Kanäle gekoppelt sein, oder auch mit beiden Kanälen. In diesem Fall enthält das Bild die Summe der Intensitäten der beiden Kanäle. Auch die Verbindung von zwei CCD- oder CMOS-Arrays in einer Bildaufnahmeeinheit ist im Fall eines Stereomikroskops möglich, auf diese Weise lassen sich Stereobilder generieren.

Offenbart wird außerdem ein Verfahren zur Entnahme von Teilen von Proben, bei dem insbesondere auch die vorgenannten Probenmanipulationsvorrichtungen verwendet werden können. Bei einem solchen Verfahren wird mittels einer als Mikroskop ausgestalteten Beobachtungseinheit eine Soll-Position ausgewählt, an der sich zu ein entnehmender Probenteil befindet. Anschließend wird die Ist-Position einer Manipulationsspitze relativ zur Beobachtungseinheit mit Hilfe einer ebenfalls als Mikroskop ausgestalteten, optischen Positionsmeßeinheit bestimmt, die Manipulationsspitze zur Soll-Position bewegt und der Probenteil entnommen. Der entnommene Probenteil kann an einer vorgegebenen Position wieder abgesetzt werden.

Die Ist-Position wird dabei vorzugsweise bestimmt, in dem die Manipulationsspitze mittels einer Steuereinheit zunächst so in den Strahlengang der Positionsmeßeinheit geführt wird, daß ihre Umrisse für diese erkennbar sind. Anschließend erfolgt in mehreren Schritten eine Scharfstellung auf die Spitze, anhand der eingestellten Parameter werden dann die Koordinaten der Manipulationsspitze im Koordinatensystem der Beobachtungseinrichtung bestimmt. Aus dem Abstandsvektor zwischen Soll- und Ist-Position im Koordinatensystem der Beobachtungseinheit läßt sich dann die notwendige Verstellung zur Anfahren der Soll-Position bestimmen.

### Kurze Beschreibung der Zeichnungen

Die Erfindung soll im folgenden anhand von einem Ausführungsbeispiel näher erläutert werden. In den dazugehörigen Zeichnungen zeigt
- Fig.1: die Perspektivansicht einer erfindungsgemäßen Probenmanipulationsvorrichtung mit einem Manipulationswerkzeug, und
- Fig.2: eine detaillierte Skizze der Anordnung und des Zusammenwirkens der einzelnen Baugruppen.

### Ausführliche Beschreibung der Zeichnungen

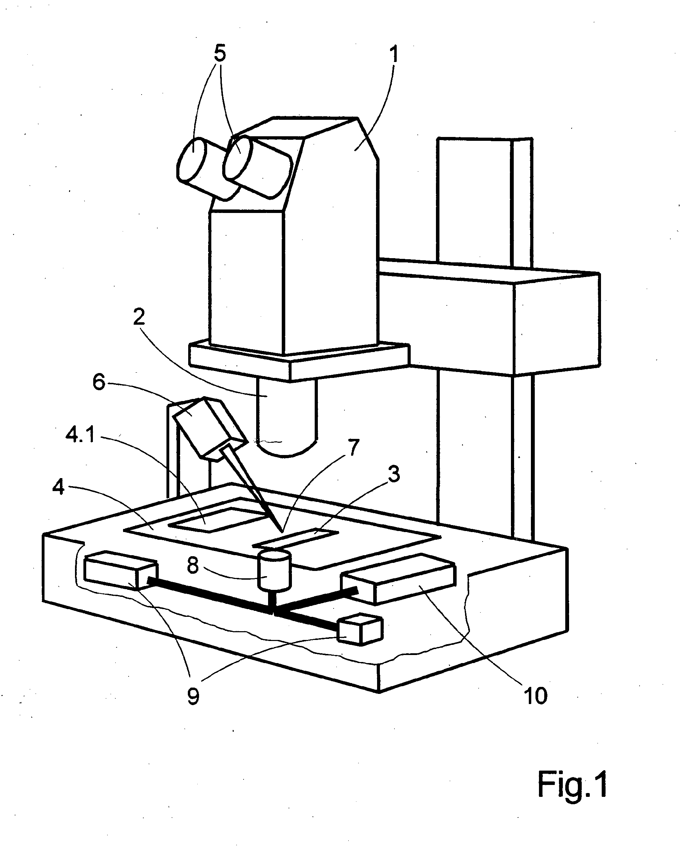

Die in Fig.1 dargestellte Probenmanipulationsvorrichtung enthält als Beobachtungseinheit ein Stereomikroskop 1. In diesem integriert ist gleichzeitig auch die Beleuchtungseinrichtung der Probe. Über das Objektiv 2 des Stereomikroskops 1 fällt Licht auf eine Probe 3, die auf einem Probentisch 4 fixiert ist. Von der Probe 3 Licht auf eine Probe 3, die auf einem Probentisch 4 fixiert ist. Von der Probe 3 zurückgestrahltes Licht wird dann über das Objektiv 2 zu den Okularen 5 des Stereomikroskops 1 gelenkt. Der Probentisch 4 ist in der Ebene des Tisches, d.h. senkrecht zur optischen Achse des Objektivs 2, verschiebbar. Links vom Stereomikroskop 1 befindet sich ein Manipulationswerkzeug 6 mit einer Manipulationsspitze 7. Das Manipulationswerkzeug 6 ist dabei optional, Manipulationen an der Probe können auch über das Manipulationsobjektiv 8 vorgenommen werden. Mit dem Manipulationswerkzeug 6 bzw. der Manipulationsspitze 7 werden der Probe 3 Teile, beispielsweise einzelne Zellen, entnommen und in einem Absetzfeld 4.1 abgesetzt. Bei dem Absetzfeld 4.1 kann es sich beispielsweise um eine Metallplatte mit einzelnen Meßstellen handeln, eine Mikrotiterplatte oder ähnliches. Bei Bedarf können die Absetzpositionen vorgegeben und zur weiteren Verwendung gespeichert werden. Über das Manipulationsobjektiv 8 können beispielsweise Laser 9 auf die Probe 3 gelenkt werden. Diese Laser 9 können dabei die Funktion von Werkzeugen wie optischen Pinzetten oder einem Laserskalpell übernehmen, aber auch Meßaufgaben ausführen. Wenn ein Manipulationswerkzeug 6 vorhanden ist, so erfüllt das Manipulationsobjektiv 8 noch eine weitere Aufgabe, nämlich ein Bild der Manipulationsspitze 7 zu erfassen und auf eine CCD-Kamera 10 abzubilden. Aus Bildern, die aus verschiedenen Höhen aufgenommen wurden läßt sich iterativ die Manipulationsspitze 7 scharf stellen und so deren Position in Relation zur Beobachtungseinheit bestimmen.

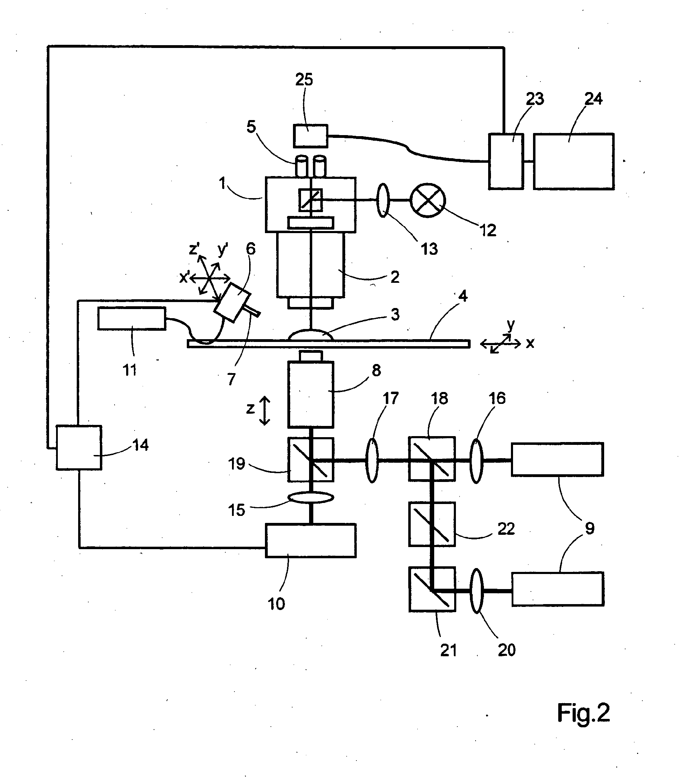

In Fig.2 sind die einzelnen Komponenten der Probenmanipulationsvorrichtung dargestellt. Die Vorrichtung umfaßt ein Stereomikroskop 1 mit einem Objektiv 2, einen motorisch verstellbaren Probentisch 4, auf dem die Probe 3 fixiert ist, sowie ein in den drei Raumrichtung motorisch verstellbares Manipulationswerkzeug 6, welches mit einer Manipulationsspitze 7 versehen ist. Das Koordinatensystem des Manipulationswerkzeuges 6 wird dabei mit den Koordinaten x' ,y' und z' bezeichnet. An das Manipulationswerkzeug 6 angeschlossen ist eine Ansaugvorrichtung 11 für Kapillaren. Die Probe 3 wird über eine Beleuchtungsquelle 12, die über eine Linse 13 in den Strahlengang eingekoppelt wird, bestrahlt. Dabei kann es sich beispielsweise um einen Laser handeln, der Fluoreszenz anregt, wenn die Probe 3 mit entsprechenden Farbstoffen markiert ist. Der Probentisch 4 ist in der Lage, Teile, die sich in der Objektebene befinden, in dieser Ebene, der mit X-Y bezeichneten Ebene, zu verschieben. Das Manipulationswerkzeug 6 dient vorzugsweise zur Aufnahme einer Kapillare und läßt sich wie angedeutet in den drei unabhängigen Achsen x', y' und z' verstellen. Diese Achsen sind in der Regel nicht mit den Achsen x, y und z identisch. Unterhalb des Probentisches 4 befindet sich das Manipulationsobjektiv 8, welches in z-Richtung, d.h. entlang der optischen Achse bzw. senkrecht zur Ebene des Tisches bewegt werden kann. Für das Aufsaugen ausgewählter Gewebeteilchen ist es notwendig, die räumlichen Koordinaten der Manipulationsspitze 7 genau zu kennen.

Wenn es sich bei der Manipulationsspitze 7 um eine Kapillare handelt, so werden diese häufiger ausgewechselt, anschließend müssen ihre Koordinaten neu bestimmt werden. Bei der Bestimmung der Koordinaten der Spitze kann man die geringe Tiefenschärfe des Manipulationsobjektivs 8 ausnutzen. Durch einen Regelkreis, der das Bild der CCD-Kamera 10, eine entsprechenden Bildverarbeitungssoftware und die Steuerung der motorisch verstellbaren Achsen x', y' und z' des Manipulationswerkzeuges 6 umfaßt, ist es möglich, den exakten räumlichen Ort der Manipulationsspitze 7 zu ermitteln. Während der Dauer der Koordinatenbestimmung befindet sich das Manipulationsobjektiv immer in derselben z-Position, die einer Steuereinheit 14, die die Messung steuert, bekannt ist. Zunächst wird die Manipulationsspitze 7 über die Steuereinheit 14 solange bewegt, bis die Bildverarbeitung, die das Bild der CCD-Kamera 10 auswertet und in die Steuereinheit 14 integriert sein kann, die Umrisse der Manipulationsspitze 7 erkennt. Dann greift der Regelkreis und wird über die Steuereinheit 14 das Manipulationswerkzeug 6 mit der Manipulationsspitze 7 so bewegt, daß am Ende der Regelung die Manipulationsspitze 7 scharf auf die CCD-Kamera 10 abgebildet wird. Da die Abbildungsverhältnisse des Manipulationsobjektivs 8 in Kombination mit der abbildenden Linse 15 der Steuereinheit bekannt sind, läßt sich so die Koordinate z der Manipulationsspitze 7 im Koordinatensystem des Stereomikroskops bestimmen. Über die Lage der Manipulationsspitze 7 innerhalb des von der CCD-Kamera 10 aufgenommenen Bildes lassen sich ebenfalls die Koordinaten x und y ermitteln. Vorteilhaft kann man den Regelkreis auch so gestalten, daß sich die Manipulationsspitze 7 am Ende der Prozedur in der Bildmitte befindet. Falls sich bei der Suche nach den Umrissen der Manipulationsspitze 7 Teile des Manipulationswerkzeuges 6 schon im Tiefenschärfebereich des Manipulationsobjektivs 8 befinden, läßt sich dieser Umstand ebenfalls dazu nutzen, das Werkzeug so zu bewegen, daß am Ende der Regelung die Manipulationsspitze 7 scharf abgebildet wird. Die Achsen des Manipulationswerkzeuges 6 können dabei beispielsweise elektromechanisch verstellt werden.

Verwendet man eine Kapillare mit abgewinkelter Spitze, die um ihre Achse drehbar eingespannt ist, so kann und sollte zusätzlich noch die Stellung des Winkels bestimmt werden, damit die Spitze jeweils in den richtigen Winkel gedreht werden kann. Dies kann eindeutig erreicht werden, indem die Position der Spitze bei mehreren Winkelstellungen bestimmt wird - entweder durch Verstellung bei gleichzeitig folgender Scharfstellung oder Drehen und anschließendem Suchen. Aus den Positionen, die alle auf dem Umfang eines Kreises liegen, läßt sich dessen Mittelpunkt bestimmen. Eine abgewinkelte Kapillare bietet in der Praxis Vorteile, da man sie fast parallel zur Objektebene fixieren kann - dies gibt ein besseres Gefühl für die Höhe beispielsweise bei der Übergabe von einer optischen Pinzette. Zum Absetzen des entnommenen Probenteils wird die Kapillare dann so gedreht, daß ihre Öffnung nach unten zeigt.

Zusätzlich zum oder auch anstelle des Manipulationswerkzeuges 6 können laseroptische Werkzeuge vorgesehen sein. In Fig.2 sind zwei Laser 9, die jeweils Licht unterschiedlicher Wellenlänge ausstrahlen, vorgesehen. Der obere der beiden Laser 9 fungiert als sogenanntes Laserskalpell, seine Strahlung wird über den Strahlformer 16, die Linse17 und die Strahlteiler 18 und 19 in das Manipulationsobjektiv 8 und von dort in die Objektebene eingekoppelt. Der untere der beiden Laser 9 fungiert als sogenannte optische Pinzette. Sein Licht wird über einen Strahlformer 20, einen Umlenkspiegel 21, eine Scaneinheit 22, den Strahlteiler 18, die Linse 17, und den Strahlteiler 19 in das Manipulationsobjektiv 8 und von dort in die Objektebene eingekoppelt. Mittels der Scaneinheit 22 kann die optische Pinzette dabei innerhalb des Sichtfeldes des Manipulationsobjektivs 8 frei bewegt werden. Stereomikroskop 1, Probentisch 4, die Bewegung des Manipulationsobjektivs 8 entlang der z-Richtung sowie die Bewegung des Manipulationswerkzeuges 6 können auch zentral von einer gesonderten Einheit gesteuert werden. Dabei kann es sich beispielsweise um einen PC 23 handeln, der mit einem Monitor 24 verbunden ist. Auch die Steuereinheit 14 kann in diesen PC 23 integriert sein, zumindest ist sie mit ihm verbunden. Auf den Monitor 24 des PCs 23 lassen sich beispielsweise das Mikroskopiebild, das von einer CCD-Kamera 25 aufgenommen wird, sowie die Orte der laseroptischen Werkzeuge abbilden.

In einer weiteren Ausgestaltung der Erfindung kann mindestens ein Teil der einzelnen Schritte, bevorzugt aber jeder Schritt, angefangen bei der Beobachtung über die Auswahl zur Präparation, der Aufnahme und des Transfers bis hin zur Abgabe des Gewebeteilchens genau dokumentiert werden, wozu die CCD-Kamera 25 den wesentlichen Teil beiträgt. Die Positionen, an denen die entnommene Zelle oder das Gewebeteilchen abgesetzt werden soll, können vorgegeben und gespeichert werden, auch in Abhängigkeit von der Probe. Dies ist insbesondere dann vorteilhaft, wenn von vielen verschiedenen Proben Gewebeteilchen entnommen werden und später noch eine eindeutige Zuordnung möglich sein muß, beispielsweise in der Gerichtsmedizin.

Bei den laseroptischen Werkzeugen kann außerdem statt einer Scaneinheit 22 auch ein sogenannter *Spatial Light Modulator* (SLM) vorgesehen sein. Mit diesem lassen sich auch mehrere optische Pinzetten, prinzipiell auch eine sogenannte *Multi-*Beam-Pinzette realisieren.

### Bezugszeichenliste

- 1: Stereomikroskop
- 2: Objektiv
- 3: Probe
- 4: Probentisch
- 4.1: Absetzfeld
- 5: Okular
- 6: Manipulationswerkzeug
- 7: Manipulationsspitze
- 8: Manipulationsobjektiv
- 9: Laser
- 10: CCD-Kamera
- 11: Ansaugvorrichtung
- 12: Beleuchtungsquelle
- 13: Linse
- 14: Steuereinheit
- 15,: Linse
- 16: Strahlformer
- 17: Linse
- 18, 19: Strahlteiler
- 20: Strahlformer
- 21: Umlenkspiegel
- 22: Scaneinheit
- 23: PC
- 24: Monitor
- 25: CCD-Kamera

## Patentansprüche

1. Probenmanipulationsvorrichtung, umfassend
- eine Beobachtungseinheit (1, 2), mit der eine Probe (3) beobachtet und eine Soll-Position, an der sich ein zu entnehmender Teil der Probe (3) befindet, ausgewählt wird,
- einen Probentisch (4), der die Probe (3) aufnimmt,
- ein räumlich relativ zur Beobachtungseinheit (1, 2) verstellbares Manipulationswerkzeug (6) mit einer auswechselbaren Manipulationsspitze (7), mit der der Probe (3) Teile entnommen werden,
- eine Steuereinheit (14), mit der die Verstellung des Manipulationswerkzeugs (6) gesteuert wird, sowie
- eine mit der Steuereinheit (14) verbundene optische Positionsmeßeinheit (8, 10), wobei die Steuereinheit (14) dazu ausgelegt ist, mit der optischen Positionsmeßeinheit (8, 10) im Gebrauch die Ist-Position der Manipulationsspitze (7) zu bestimmen, so daß durch die Steuereinheit (14) eine gezielte Verstellung der Manipulationsspitze (7) zur Soll-Position durchgeführt wird,
**dadurch gekennzeichnet, daß**
- Positionsmeßeinheit (8, 10) und Beobachtungseinheit (1, 2) jeweils als Mikroskope ausgestaltet sind, wobei der Probentisch (4) zwischen der Beobachtungseinheit (1, 2) und der optischen Positionsmeßeinheit (8, 10) angeordnet ist, und wobei die Positionsmeßeinheit (8, 10) ein Objektiv (8) mit einer Tiefenschärfe von der Größenordnung der Manipulationsspitze (7) aufweist.

2. Probenmanipulationsvorrichtung nach Anspruch 1, **dadurch gekennzeichnet, daß** die Positionsmeßeinheit (8, 10) eine Bildaufnahme- und Bildverarbeitungseinheit aufweist.

3. Probenmanipulationsvorrichtung nach Anspruch 1 oder 2, **dadurch gekennzeichnet, daß** der Probentisch (4) relativ zu Beobachtungs- und Positionsmeßeinheit (1, 2, 8, 10) verstellbar ist.

4. Probenmanipulationsvorrichtung nach einem der vorgenannten Ansprüche, **dadurch gekennzeichnet, daß** die Positionsmeßeinheit (8, 10) entlang ihrer optischen Achse verstellbar ist.

5. Probenmanipulationsvorrichtung nach einem der vorgenannten Ansprüche, **dadurch gekennzeichnet, daß** die optischen Achsen der Objektive (2, 8) von Beobachtungs- und Positionsmeßeinheit (1, 2, 8, 10) parallel liegen.

6. Probenmanipulationsvorrichtung nach Anspruch 5, **dadurch gekennzeichnet, daß** die optischen Achsen aufeinander fallen.

7. Probenmanipulationsvorrichtung nach einem der vorgenannten Ansprüche, **dadurch gekennzeichnet, daß** die Beobachtungseinheit (1, 2) als Stereomikroskop oder Auflichtmikroskop ausgestaltet ist.

8. Probenmanipulationsvorrichtung nach einem der vorgenannten Ansprüche, **dadurch gekennzeichnet, daß** die Beobachtungseinheit (1, 2) eine Bildaufnahme- und Bildverarbeitungseinheit aufweist.

## Claims

1. Sample manipulation apparatus including
- an observation unit (1, 2), with which a sample (3) is observed and a desired position, at which a portion of the sample (3) to be removed is situated, is selected,
- a sample table (4), which receives the sample (3),
- a manipulation tool (6), which is spatially movable relative to the observation unit (1, 2), with a replaceable manipulation tip (7), with which portions are removed from the sample (3),
- a control unit (14), with which the movement of the manipulation tool (6) is controlled, and
- an optical position measuring unit (3, 10) connected to the control unit (14), wherein the control unit (14) is designed, in use, to determine the actual position of the manipulation tip (7) with the optical position measuring unit (8, 10) so that a targeted movement of the manipulation tip (7) to the desired position is effected,
**characterised in that**
the position measuring unit (8, 10) and the observation unit (1, 2) are each constructed in the form of microscopes, wherein the sample table (4) is arranged between the observation unit (1, 2) and the optical position measuring unit (8, 10) and wherein the position measuring unit (8, 10) has an objective (8) with a depth of field of the order of the manipulation tip (7).

2. Sample manipulation apparatus claimed in Claim 1, **characterised in that** the position measuring unit (8, 10) has an image acquisition unit and image processing unit.

3. Sample manipulation apparatus as claimed in Claim 1 or 2, **characterised in that** the sample table (4) is movable relative to the observation unit and position measuring unit (1, 2, 8, 10).

4. Sample manipulation apparatus as claimed in one of the preceding claims, **characterised in that** the position measuring unit (8, 10) is movable along its optical axis.

5. Sample manipulation apparatus as claimed in one of the preceding claims, **characterised in that** the optical axes of the objectives (2, 8) of the observation unit and position measuring unit (1, 2, 8, 10) are parallel.

6. Sample manipulation apparatus as claimed in Claim 5, **characterised in that** the optical axes are coincident.

7. Sample manipulation apparatus as claimed in one of the preceding claims, **characterised in that** the observation unit (1, 2) is constructed in the form of a stereo microscope or reflecting microscope.

8. Sample manipulation apparatus as claimed in one of the preceding claims, **characterised in that** the observation unit (1, 2) has an image acquisition unit and image processing unit.

## Revendications

1. Dispositif de manipulation d'échantillons, comprenant :
- une unité d'observation (1, 2) avec laquelle un échantillon (3) est observé et une position théorique dans laquelle se trouve une partie de l'échantillon (3) devant être prélevée est choisie,
- une table d'échantillon (4) qui reçoit l'échantillon (3),
- un outil de manipulation (6) réglable dans l'espace par rapport à l'unité d'observation (1, 2) comprenant une tête de manipulation remplaçable (7) avec laquelle des parties de l'échantillon (3) sont prélevées,
- une unité de commande (14) avec laquelle le réglage de l'outil de manipulation (6) est commandé, et
- une unité de mesure de position optique (8, 10) reliée à l'unité de commande (14), étant entendu que l'unité de commande (14) est conçue afin de déterminer la position effective de la tête de manipulation (7) avec l'unité de mesure de position optique (8, 10) pendant l'utilisation de façon à ce qu'un réglage ciblé de la tête de manipulation (7) jusqu'à la position théorique soit exécuté au moyen de l'unité de réglage (14),
**caractérisé en ce que** l'unité de mesure de position (8, 10) et l'unité d'observation (1, 2) sont chacune réalisées comme microscopes, étant entendu que la table d'échantillon (4) est agencée entre l'unité d'observation (1, 2) et l'unité de mesure de position optique (8, 10) et étant entendu que l'unité de mesure de position (8, 10) présente un objectif (8) ayant une profondeur de champ de l'ordre de grandeur de la tête de manipulation (7).

2. Dispositif de manipulation d'échantillons selon la revendication 1, **caractérisé en ce que** l'unité de mesure de position (8, 10) présente une unité d'enregistrement d'image et de traitement d'image.

3. Dispositif de manipulation d'échantillons selon la revendication 1 ou 2, **caractérisé en ce que** la table d'échantillon (4) peut être réglée par rapport à l'unité d'observation et de mesure de position (1, 2, 8, 10).

4. Dispositif de manipulation d'échantillons selon l'une des revendications précédentes, **caractérisé en ce que** l'unité de mesure de position (8, 10) peut être réglée le long de son axe optique.

5. Dispositif de manipulation d'échantillons selon l'une des revendications précédentes, **caractérisé en ce que** les axes optiques des objectifs (2, 8) de l'unité d'observation et de mesure de position (1, 2, 8, 10) s'étendent parallèlement.

6. Dispositif de manipulation d'échantillons selon la revendication 5, **caractérisé en ce que** les axes optiques se superposent.

7. Dispositif de manipulation d'échantillons selon l'une des revendications précédentes, **caractérisé en ce que** l'unité d'observation (1, 2) est réalisée microscopie stéréoscopique ou microscope à lumière incidente.

8. Dispositif de manipulation d'échantillons selon l'une des revendications précédentes, **caractérisé en ce que** l'unité d'observation (1, 2) présente une unité d'enregistrement d'image et de traitement d'image.
